# EUROPEAN PATENT APPLICATION

(11) **EP 3 252 714 A1**
(43) Date of publication of application: **06.12.2017**
(21) Application number: 16172949.6
(22) Date of filing: 03.06.2016
(51) Int. Cl.: G06T 7/00

(54) **CAMERA SELECTION IN POSITIONAL TRACKING**

(71) Applicant: Univrses AB, 583 32 Linköping (SE)
(72) Inventor: Michot, Julien, 172 69 Sundbyberg (SE); Helgesson, Ricky, 645 94 Strängnäs (SE); Andersson, Christer, 124 30 Bandhagen (SE)
(74) Representative: Awapatent AB

(57) **Abstract**

The present invention relates to a method for positional tracking of a unit having a plurality of cameras, including a set of active cameras and a set of inactive cameras, the method comprising: A) acquiring image data from at least one active tracking camera; B) identifying visual odometry information from said image data; C) estimating, based on said visual odometry information, a pose of the unit; D) assessing a reliability of said pose by calculating a reliability value of said estimated pose; and if said estimated reliability value is below a predetermined threshold value: E) selecting a candidate camera based on a current orientation of the unit, and performing the method steps of A to D using the candidate camera to verify that an estimated pose has a reliability value above the threshold, and then selecting said candidate camera as an active tracking camera. The present invention also relates to a unit for positional tracking in an environment and to a system comprising a unit, in the form of a VR controller and a VR headset.

## Description

### Technical field

The present invention relates to positional tracking of a unit having a plurality of cameras. In particular the invention relates to the technical field of augmented reality or virtual reality and in particular to a method for tracking motion and position, or pose, of a multi camera virtual reality controller input device in a virtual reality environment.

### Background art

Computer-mediated reality (MR) refers to the ability to add to, subtract information from, or otherwise manipulate one's perception of reality through images shown on a display or monitor. This is often done by capturing an image and altering it before showing it to a user on a display or monitor. A more common example of mediated reality is virtual reality (VR), wherein computer technology replicates an environment, real or imagined, and simulates a user's physical presence and environment in a way that allows the user to interact with it. Virtual realities artificially create sensory experience, which can include sight, touch, hearing, and smell.

Augmented reality (AR) is a live direct or indirect view of a physical, real-world environment whose elements are augmented (or supplemented) by computer-generated sensory input such as sound, video, graphics or GPS data. Such augmentation may be the overlay of computer generated graphic on a live video feed captured by a camera. A common example of AR is a HUD, or head-up display showing data, information, and images while a user views the real world.

A common problem with MR is that positional tracking of an object, such as a headset or a controller, needs to be fast and accurate. Many different techniques for positional tracking are available in the prior art, however, many are associated with drawbacks. If the tracking of an object is not fast and accurate the experienced presence in the VR environment, or the sensed proprioception of a user, may be reduced. Proprioception is part of a psychological phenomenon that involves the tricks the brain uses to construct a synchronous environment from its various inputs.

The virtual reality (VR) systems may be divided into two major areas: mobile VR and stationary VR. Virtual reality involves replacing normal sensory input of a human, often sight and sound, by a computerized virtual environment such that the mind of the human is tricked or influenced such that the brain is experiencing or is perceived as being a part of said virtual environment. This is normally done by the human subject wearing a headset comprising small monitors visualizing the virtual environment to the eyes of the human subject as well as headphones transmitting the environmental sounds of the virtual reality.

The headset thus requires power for powering the displays, and the headphones of the headset. In addition many headsets comprise advanced systems for identifying movements of the headset such that the VR environment can in turn adapt the view to the movements. A VR environment may be said to transfer the movements of the user, in the real world, to the VR environment. For instance, if the viewer looks to the left the VR view displayed to the user should pan to the left of the VR environment in order for the user to gain the perceived sense of being a part of or being inside the VR environment.

The common VR systems are stationary systems requiring being connected to a computational device for supplying power, transmitting sensor information to the computational device and for transmitting display and audio information from the computational device to the headset. The drawback of such systems is that the connection to the computational device may results in a less realistic experience and in particular a less perceived sense of being a part of or being inside the VR environment.

Mobile VR aims at alleviating some of the drawbacks of stationary VR by arranging the computational device in the headset. This however introduces limitations to the computational power of the computational device. The shape, size and weight of the headset does requires the size of the computational device be small and limit the energy capacity of the batteries powering the mobile VR system.

Mobile as well as stationary VR systems may further include controllers for providing input to as well as a means for manipulating the VR environment. Such a controller may further comprise means for tracking the controller in relation to the headset such that movement of the controller in the real life environment may be translated to the VR environment.

VR headsets are often fitted with an inertial measurement unit IMU comprising means for determining the IMU sensors movement and orientation in relation to a geographic coordinate system. Such sensors offer normally offer a reasonable level of accuracy for most applications however when used in mobile VR systems the phenomena of drift often occurs after a short time period e.g. within a few seconds. Such drift will slowly pan, or move, the view of the VR environment such that after a time period forward in the VR environment is not aligned with the forward direction of the real world.

A plurality of methods for ameliorating the problem with drift has been proposed, most involving additionally and stationary mounted positional trackers, mounted in the room or space a user of the VR system is moving in and arranged for tracking the movement of the headset and thus the user.

One such positional tracking solution involves attaching infrared light emitting diodes, IR-LED's, to the headset and using a stationary mounted IR receiver track the movement of the IR-LED's. Another system involves mounting a stationary light beacon transmitting system transmitting non-visible light at pre-determined intervals together using a plurality of LED's emitting non-visible light. The headset is arranged with light sensing photo sensors arranged for detecting the emitted non-visible light. After the light has been emitted the headset starts measuring time until the photo sensors registers, or sees, the emitted light. The time elapsed from light being emitted and registered by the photo sensors may then be used for calculating and determining the position, or pose, of the VR headset.

The above headset position tracking systems may achieve great accuracy however are still complex and require the use of additional transmitters which greatly increase the costs for manufacturing the VR systems.

Another solution is positional tracking based on acquiring images from a camera mounted on a mobile unit, and compare these images to a virtual map of the environment surrounding the unit. Such a virtual map is referred to as an odometry map. The images from the unit may be used also to continuously update the map, in which case the tracking is referred to as simultaneous localization and mapping, SLAM.

In some applications, positional tracking using an odometry map, with or without simultaneous mapping, will require a plurality of cameras on the unit, each camera having a different field of view. With a sufficient number of cameras, the performance of odometry map tracking provides a satisfactory alternative to stationary trackers mentioned above. However, in a mobile unit the continuous use of a plurality of cameras will significantly reduce battery life. A popular unit where positional tracking is of high importance is a domestic robotic, such as robotic lawn mower or robotic vacuum cleaner. A requirement for domestic robots is that the robots need to support both positional tracking and environmental mapping. Further domestic robots are often battery powered sporting a requirement for reduced power usage when active.

Hence, there is a great need to improve the methods for positional tracking of a mobile unit having a plurality of cameras, such as VR headsets or VR controllers, or domestic robots.

### Summary of the invention

It is an object of the present invention to improve the current state of the art, and to solve, or at least mitigate, some of the above problems. These and other objects are achieved by an improved method, and a controller, for positional tracking.

According to a first aspect of the present invention, the above object is achieved by a method for positional tracking of a unit having a plurality of cameras, including a set of active cameras and a set of inactive cameras, the method comprising:
A) acquiring image data from at least one active tracking camera;
B) identifying visual odometry information from said image data;
C) estimating, based on said visual odometry information, a pose of the unit;
D) assessing a reliability of said pose by calculating a reliability value of said estimated pose; and
   if said estimated reliability value is below a predetermined threshold value:
E) selecting a candidate camera based on a current orientation of the unit, and
performing the method steps of A to D using the candidate camera to verify that an estimated pose has a reliability value above the threshold, and then selecting said candidate camera as an active tracking camera.

An active camera may be defined as a camera configured to and currently capturing image data of the environment around the unit. An inactive camera may be a camera not currently capturing image data of the environment around the unit, and may therefore be in a "sleep"-mode or power savings mode.

Image data may comprise an image or other representation of the environment acquired by a camera. Image data may be a digital image such as a 2D pixelated image of the environment, where each pixel contains information such as light intensity, color, IR information, or depth data. Depth data is image data comprising information regarding the distance from the camera recording point to surfaces or objects of the recorded environment. Depth data may be acquired using a depth-sensing time-of-flight camera, or other depth-sensing cameras. The image data may be a combination of the different types of image data, such as 2D digital color images of the environment and depth map image data.

The "reliability value" is a numerical representation of how reliable the tracking of the estimated pose or the position of the unit is. When the reliability value of a pose determined based visual odometry from the active camera is found to be too low (too unreliable) the reliability values for poses determined using odometry information from other cameras are determined, and a camera providing a satisfactory reliability is selected.

With this method, power consumption is significantly reduced by using only one active camera. At the same time, the method ensures selecting an active camera that enables satisfactory (reliable) tracking, thereby maintaining the advantage of having several cameras.

The "estimated pose" may correspond to a point in time when the image data was acquired, i.e. be a "current" pose with respect to available image data. Alternatively, the "estimated pose" corresponds to a point in time *after* acquiring the image data, i.e. it is a "predicted" pose with respect to available image data.

The "reliability value" is typically a probability measure, simply indicating how probable it is that the pose is correct. Such a probability measure may be applicable to a current pose as well as a predicted pose.

It is noted that the reliability value for a predicted pose may be higher than the reliability value for a current pose. This corresponds to a situation where the field of view (of the active camera) in the current pose has less visual odometry information than the field of view (of the active camera) in a predicted pose. The reliability value of the present invention should thus not be confused with the reliability of the prediction itself.

In the case of a current pose, the reliability value may simply be a Boolean variable indicating whether the current pose could be determined or not. In other words, in a situation where the current pose cannot be determined based on the image data, the reliability value is zero (OFF), while in a situation where the pose can be determined, the reliability value is one (ON).

The determined estimated pose may be done using a non-linear optimization such as least square minimization; or filtering framework from which one could use of extract a covariance matrix associated to the pose.

The elements in the diagonal of the pose's associated covariance matrix may be used to establish a reliability value measure.

By (accurately) predicting poses it is possible to update the positional tracking with a frequency greater than the frame rate of the cameras, which improves quality of the tracking. In at least one exemplary embodiment of the present invention the predicted pose is based also on a prediction of a unit movement. Advantageously the predicted pose may be based on extrapolating the current movement of the unit, the current movement determined by analyzing and tracking the pose of the unit, for determining a future pose of the unit. In addition to image data the predicted pose may be based on additional movement information such as inertial movement sensor data.

In at least one exemplary embodiment of the present invention the step of selecting a candidate camera includes selecting a camera with a camera frustum which is non-overlapping with the camera frustum of the currently active camera(s). Hence, the selected candidate camera comprises different visual odometry information compared to the camera currently active camera(s) of the unit. Additionally, a camera having a camera direction being at least 60 degrees different from the currently active camera(s) may be chosen as a candidate camera. Additionally or alternatively the candidate camera has a larger field of view compared to the currently active camera(s). The candidate camera may then be a wide angle or a fish eye camera.

In at least one exemplary embodiment of the present invention the step of selecting a candidate camera includes detecting a direction of movement of the unit, and selecting a camera with a direction substantially parallel to said direction of movement. By selecting a camera being substantially parallel to the direction of movement of the unit, a higher reliability value may be calculated based on the visual odometry information from the substantially parallel, to the direction of movement of the unit, candidate camera.

In at least one exemplary embodiment of the present invention the step of estimating a pose of the unit includes matching the visual odometry information against pre-recorded visual odometry map data.

In at least one exemplary embodiment the step of identifying visual odometry information comprises: detecting edges in said image data from said active tracking camera; and/or detecting corners, blobs or ridges in said image data from said currently active camera(s).

In at least one exemplary embodiment of the step of selecting a candidate camera includes selecting a camera with a field of view in a direction corresponding to a high visual information density portion of said visual odometry map. Hence, choosing a camera facing a view with high density visual information will result in a higher reliability value, compared to choosing a camera having a field of view facing a low density view, for instance a camera facing a wall. Additionally a candidate camera with visual odometry information further away from the unit may be chosen.

In at least one exemplary embodiment of the present invention the predicted pose is based also on movement data acquired from one or several motion sensors. Movement data is advantageous for predicting the pose of a unit. Movement data adds an additional source for input data when predicting the pose of the unit. Further movement data may be collected using inexpensive motion sensors.

In at least one exemplary embodiment of the present invention the motion sensors include at least one of: an inertial movement sensor, a magnetometer, a radar sensor, a lidar sensor, a laser sensor, a micro distance sensor, a beacon, an RFID sensor, a GPS sensor, or another positional tracking sensor. The motion sensors may comprise a combination of the different motion sensors, providing additional motion data and motion data redundancy.

In at least one exemplary embodiment of the present invention, assessing a reliability of the predicted pose includes: matching the predicted pose with the pre-recorded visual odometry map data, identifying an amount of matching visual information, comparing the amount of matching visual information with a threshold value. In this case, the amount of matching visual information serves as the "reliability value", indicating how reliable the predicted pose is. If below a threshold, the reliability of the other cameras are assessed as before. Additionally or alternatively to using pre-recorded visual odometry map data, visual odometry information may be estimated without the need to reconstruct 3D features or in other words the relative position and orientation of the unit, or the relative orientation of the unit in the environment may be determined without matching the acquired visual odometry information to pre-recorded visual odometry map data. One could extract the relative position and orientation of the unit from the so called essential matrix; or determine the relative orientation using 2D homography in the case when no translation of the unit was observed. Additionally scale could be extracted from other sensors such as cameras, depth map, or the like; or the scale may be estimated using triangulation techniques.

Optionally, additional image data may be acquired from one of the inactive camera of the plurality of cameras. Such an arrangement may be advantageous when switching from an active tracking camera to an inactive camera for positional tracking. Image data from an inactive camera may then be acquired, processed and evaluated before switching to the inactive camera for positional tracking. If the data processing unit has the ability for multi threaded data processing, one of the processor cores may be arranged for processing the image data of an active tracking camera, and the additional processor cores may be adapted for processing the image data of the inactive tracking cameras.

In at least one exemplary embodiment of the present invention the step of identifying visual odometry information comprises: detecting edges in said image data from said active tracking camera; and/or detecting corners, blobs or ridges in said image data from said active tracking camera. Identifying visual odometry information may comprise techniques for identifying edges in the image data acquired from a camera. Alternatively or additionally identifying visual odometry data may comprise techniques for detecting corners, blobs or ridges in the image data from a camera, such as an active tracking camera. Thus, the method enables for identifying visual odometry information comprising different levels of features. For instance a low or standard level of visual odometry information may comprise detecting edges in the image data where as a high level of visual odometry information may comprise detecting corners, blobs or ridges in the image data, in addition to detecting edges in the image data. Hence, if the low or standard level of visual odometry information allows for accurate positional tracking the amount of data processing may be reduce, thereby reducing the power consumption of a processing unit.

In at least one exemplary embodiment the image data comprises a plurality of successive image frames. The image data may comprise a single image frame or may advantageously comprise a plurality of successive frames. Analyzing successive image frames allows for identifying more visual odometry information from the image data. The successive frames may be image data in the form of video, or streamed video, or it may be image frames with a predetermined capturing frame rate.

The invention may advantageously be used together with a smart contact lenses, such as the contact lens disclosed in US patent application, US2016091737, or when integrated in an artificial human lens implant. The contact lens or artificial lens may then be used as a visual display for an augmented reality system for displaying additional information, based on positional tracking of a bearer of the contact lens. The smart contact lens disclosed includes a first contact lens, a display unit in a center region of the first contact lens, a peripheral device on the first contact lens and around the display unit, the peripheral device being connected to the display unit, and a passivation layer covering the display unit and the peripheral device. The contact lend may then be connected to a device for performing the positional tracking method according to the first aspect of the present invention.

According to a second aspect of the present invention a unit for positional tracking in an environment is provided, the unit being configured to perform the method according to the first aspect.

In at least one embodiment of the second aspect of the present invention device comprising: at least a first and a second camera adapted for acquiring image data comprising visual odometry information; a data processing device adapted for performing the method according to the first aspect. Additionally the device may further comprise at least one motion sensor; wherein the motion sensors include at least one of: an inertial movement sensor, a magnetometer, a radar sensor, a lidar sensor, a laser sensor, a micro distance sensor, a beacon and an RFID sensor. The motion sensor may acquire movement data of the unit.

Additionally the unit further comprises a transceiver adapted for sending and receiving information from and to the device. Advantageously the unit may then form part of a system for positional tracking. The pose of the unit may be communicated to another unit or a master unit. This enables for two units two have knowledge of each other's current and future pose.

Additionally the unit comprises a plurality of cameras, wherein each of said plurality of cameras has a non-overlapping camera frustum. When the unit comprises a plurality of cameras the cameras may be arranged having non-overlapping camera frustums. Switching from positional tracking using an active tracking camera to a candidate camera thus enables for a different set of visual odometry information for positional tracking.

The present invention may advantageously be implemented in a positional tracking system comprising: a mobile VR headset; and a unit, the unit being a VR controller input device adapted to perform the method according to the first aspect.

### Brief description of the drawings

The above objects, as well as additional objects, features and advantages of the present inventive concept, will be more fully appreciated by reference to the following illustrative and non-limiting detailed description of preferred embodiments of the present inventive concept, when taken in conjunction with the accompanying drawings, wherein:
Fig. 1 illustrates a unit in the form of a VR controller for positional tracking according to an embodiment of the present invention;
Fig. 2 Illustrates a schematic view of a unit according to at least one embodiment of the present invention;
Fig. 3 illustrates a person standing in an environment in the form of a room, wearing a VR headset and the VR controller of Fig. 1 in his right hand;
Fig. 4 illustrates a flow chart for tracking a unit, such as a VR controller in an environment according to at least one embodiment of the present invention;
Fig. 5 illustrates in more detail step S5 of figure 4, in the case the estimated pose is a current pose;
Fig. 6 illustrates in more detail steps S4 and S5 of figure 4, in the case the estimated pose is a predicted pose;
Fig. 7 shows the flow chart shown in Fig. 4 further comprising the method step of matching visual odometry information against pre-recorded visual odometry map data.

All the figures are highly schematic, not necessarily to scale, and they show parts which are necessary in order to elucidate the invention, other parts being omitted or merely suggested.

### Detailed description of the drawings

Embodiments of the invention will be described in more detail in the following with reference to the accompanying drawings.

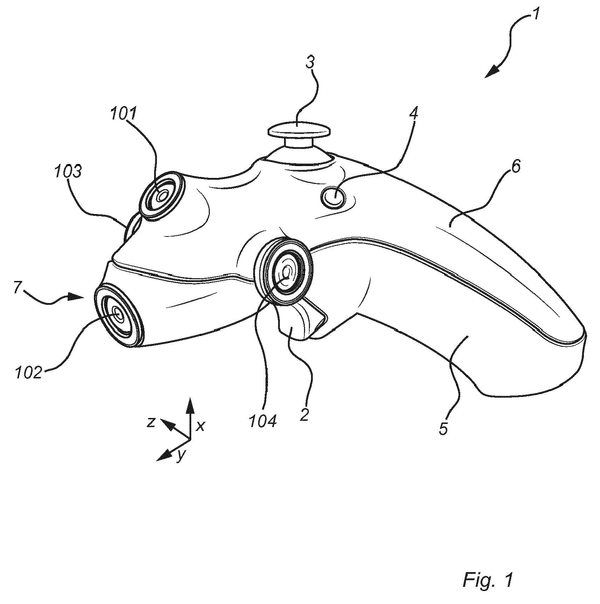

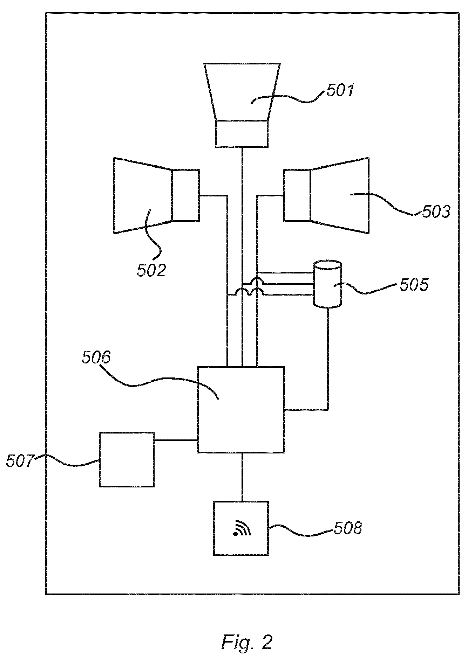

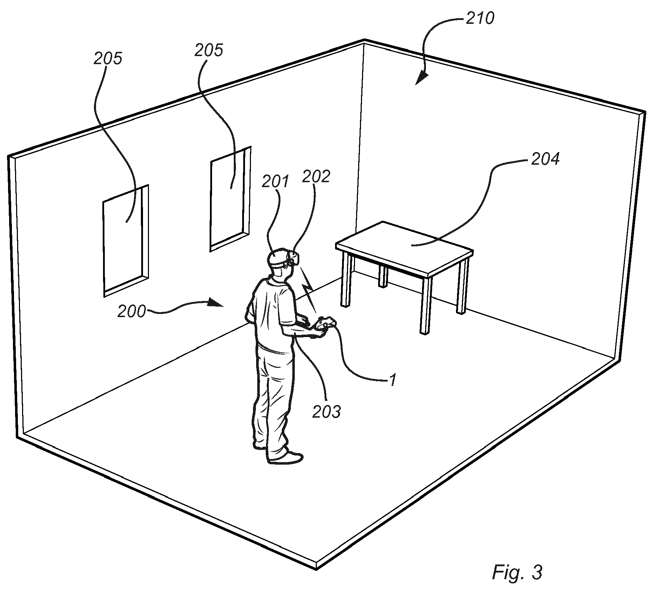

Fig. 1 illustrates a unit in the shape of a VR controller, or hand controller, 1 comprising a plurality of tracking cameras 101-104. Positional tracking is based on acquiring images from at least one of a plurality of tracking cameras 101-104 of the unit. The unit is disclosed as a VR controller however the unit may be any unit where positional tracking is desirable. For instance the unit may be a robotic unit or a unit arranged to be used in a virtual reality environment or an augmented reality environment. The plurality of cameras is shown as being four cameras however, the unit may comprise at least 2 cameras. It is possible for the unit to use 2-10 cameras, preferably 3-8 cameras, or more preferably 4-6 cameras. However, depending on the type of cameras used more than 10 cameras may be used. The tracking cameras 101-104 may be reflective radiation recording device 101-104. Preferably the tracking cameras 101-104 are digital recording cameras capable of recording digital pictures or images at a predefined capture, or recording, rate, or video having a predefined frame rate. The cameras may also be of an infrared camera type or a mixture of different cameras having different capturing techniques or properties may be used. For example one camera may be a camera having a high capture rate and another of the plurality of cameras may be a camera having a lower, or slower, capture rate. The plurality of cameras may then be paired into camera modules each comprising one camera of a first type one camera of a second typ. Such a configuration may comprise a first camera having a first image capturing resolution and a second camera may have a second image capturing resolution. For simplicity we will use the term camera when discussing the reflective radiation recording device or a camera module. Each camera 101-104 is arranged to record image data and to communicate the image data to a computing device (not shown) for further processing. The image data may be streamed directly to a computing device, such as a processor, or CPU, or may be temporarily stored on a memory device (not shown). The controller 1 shown in Fig. 1 comprises four cameras 101-104. The controller has a revolver shape defined by a handle 5 arranged for being gripped and held by a user hand (not shown) and an opposite pointing end, being comparable to the barrel and muzzle portion of a revolver. The handle 5 is of a pistol grip type and an analog trigger switch 2 is arranged on the handle 5. The trigger switch is of an analog type being operable to sense, apart from an on-off state, the amount or position the switch has been operated or moved as a function of a maximum value. Such an analog trigger often preferred in racing games where the switch is bound to operate an in-game throttle. Arranged to the upper portion of the controller is a two-axle joystick arranged to be operated by the thumb of the user hand (not shown) holding the controller 1. Arranged adjacent the joystick and between the joystick and the analog trigger switch is a digital push button 4 or push switch 4. Arranged on the pointing end 7 of the controller 1 are the four cameras 101-104 each having a frustum pointing in different directions. A first camera 101 is arranged having a frustum with a central pointing axis being parallel to a y-axis of an xyz-coordinate system. When the controller 1 is operated by a user, the frustum of the first camera 101 is pointed away from the torso of the user (see Fig. 2.). A second camera 102 is pointing in a direction, in a geometric xy-plane, and at an angle in relation to the first camera 101. The second camera 102 may thus be said to point forward and slightly upwards, having a frustum central axis pointing towards the inner ceiling when the controller 1 is used in a room as shown in figure 3.

Arranged on opposite sides of the controller 1, and pointing in the positive and the negative z-direction of the xyz-coordinate system are a third and a fourth camera 103, 104. The third and fourth camera 103, 104 are arranged to capture image data to the sides of a user holding the controller 1. The controller 1 may comprise a plurality of inertial movement sensors, or inertial movement units IMU, for sensing movement of the controller 1 as well as the pose of the controller 1. For increased positional tracking accuracy the information from the IMU's may be combined with the image data from one or a plurality of the cameras 101-104. The controller 1 in Fig. 1 is symmetric around an xy-plane such that it is usable for both right and left-handed users.

Fig. 2 shows a schematic view of a unit comprising a first, second and a third camera each arranged for acquiring image data comprising visual odometry information. During use one of the cameras 501-503 is arranged as an active tracking camera for tracking the position of the unit. Image data acquired from the active tracking camera may be sent to and stored at a memory module unit 505. The memory module unit 505 is connected to a data processing device 506. The memory module unit 505 may further comprise pre-recorded visual odometry map data. The data processing device 506 is arranged to extract visual odometry information from the image data stored on the memory module unit 505. Extracting visual odometry information may involve filtering of the data as well as processing the image data using mathematical and programming algorithms. The data processing device 506 may further be connected to an inertial movement sensor/unit 507 for recording the acceleration and movement of the unit. Connected to the data processing device 506 is also a transceiver 508 for sending and receiving information from and to the unit. For instance the transceiver 508 may communicate with a master unit, or a VR headset. Based on the visual odometry information the unit may control the cameras by activating or inactivating image data acquisition from a camera 501-503. The data processing device 506 is adapted for performing the method steps of matching the visual odometry information against pre-recorded visual odometry map data; estimating, a pose, of the unit; and assessing a reliability of the pose by calculating a reliability value of said pose, and if the reliability value is determined to be below a predetermined threshold value selecting one of first, second and third cameras as an active tracking camera.

Fig. 3 illustrates a user 200 standing in an environment in the shape of a room 210. The user 200 is wearing two units for positional tracking. A first unit in the form of a VR headset 202 arranged on the user's head 201 and a VR controller 1 in the user's right hand 203. The VR headset 202 and the VR controller are configured to communicate with each other using wireless communicating technology, such as WiFi or Bluetooth. The units may comprise visual odometry map data of the room. Such visual odometry map data may comprise visual odometry information identifying the edges of the table 204, and the windows 205. When the user walks around in the room an active tracking camera of a unit may record images of the frustum of the active tracking camera. The recorded image data may thereafter be used to identify or extract visual odometry information. Comparing the visual odometry information to pre-recorded visual odometry map data enables positional tracking of the unit in the room. Visual odometry map data may be pre-recorded visual odometry information of the table 204 and the windows 205 of the room. Naturally more objects in the room may result in more visual odometry map data and an increased positional tracking accuracy.

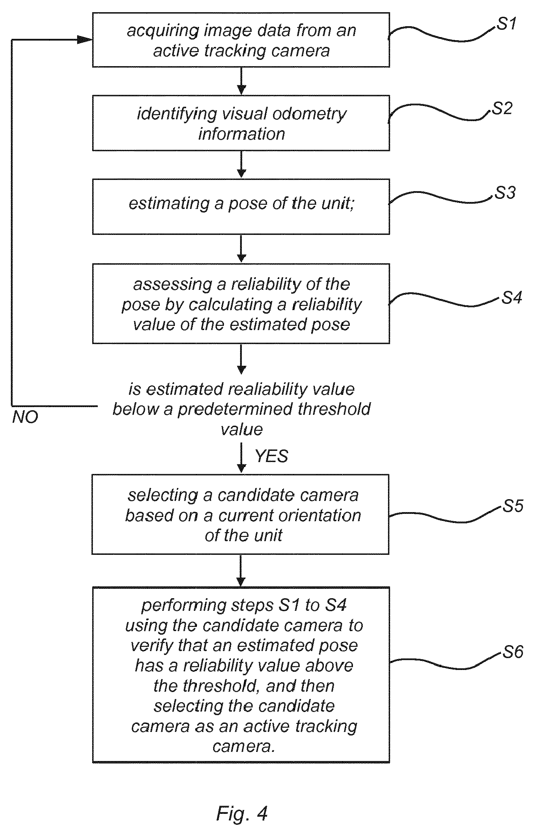

Fig. 4 illustrates a flow chart for a method for positional tracking of a unit having a plurality of cameras. Such a unit may be the virtual reality, controller or the VR headset shown in Fig. 1. However, as a non-limiting example the method may also be applicable to positional tracking of a robot in an environment such as a material handling robots in a warehouse environment. In a first step, S1, image data from an active tracking camera is acquired. An active camera may be defined as a camera currently being arranged for tracking the position, or pose, of the unit. The remaining cameras, not currently activated or arranged for tracking the position may then be referred to as inactive cameras. The visual tracking information may be raw video footage or pre-processed video footage. Such pre-processing may involve resizing the video footage, re-coloring the video footage or in other ways mathematically prepare the video footage for further tracking processing operations. The active camera may be configured to capture image data at a first frame rate. The image data captured by the active camera may be saved to a memory device and thereafter be retrieved by a data processing unit for further processing. The image data may be retrieved by the data processing unit at a retrieving rate. The retrieving rate may be lower than the first image capture frame rate of the camera. The retrieving rate may further be adapted to the current movement of the unit for further reducing the power consumption of the unit. As an example the retrieving rate of the data processing unit may be reduced to a minimum value when little to no movement of the unit is currently occurring or is expected/predicted.

In a step, S2, visual odometry information is identified from the image data acquired in method step S1. The visual odometry information may comprise image features such as detected edges; corners or interest points; blobs or regions of interest or interest points; or ridges. The visual odometry may further comprise gradients. Visual odometry information may be identified by analyzing a single image frame or by comparing a first image frame to a subsequent image frame. Image data may be a single image frame acquired from a camera. Image data may further be a number of subsequent or successive image frames acquired from a camera. The number of frames contained in image data may depend on the type of information that is being extracted from the images. For instance if the image data comprises only a single image frame gradients in the image may be used for detecting edges in the image data. This may for instance be done by convolving the image frame with a filter such as a Sobel filter.

One example of visual odometry information may be based on simultaneous localization and mapping, SLAM, techniques. SLAM may for example be used for both tracking, by indentifying and tracking, tracking points from the video footage, and localization mapping for creating a map of the environment. By creating a SLAM map of a room the power consumption required for tracking may be reduced. A pre made SLAM map of an environment further allows for sharing the SLAM map to other persons. Thus, in a shared VR environment, by sharing the SLAM map to other participants in said shared VR environment, there is no need for all the participants to run simultaneous localization mapping and tracking, but simply tracking may be sufficient.

In a step, S3, the position, or pose, of the unit in the environment is estimated. The estimation of the position of the unit may return a probable position or estimated pose of the unit. If the data for estimating a pose correspond to a point in time when the image data was acquired, i.e. be a "current" pose with respect to available image data may be estimated. Depending on the amount of available visual odometry information from the image data of the active tracking camera and the visual odometry map data available the estimated position or pose may be accurate or less accurate. Estimating the pose may involve comparing visual odometry information, or features, to a database comprising key frames of the environment wherein each key frame comprise a set of visual odometry information defining said key frame.

The estimated pose corresponds to a point in time when acquiring the image data. Advantageously when the estimated pose corresponds to a point in time when acquiring the image data the estimated pose represent the current pose or position of the unit, with a small time delay needed for performing the method on a processing unit. The estimated pose may then be an estimation of the current position of the unit in an environment. Pose estimation may also be performed on previously acquired image data. As an example the acquired images from all of the cameras may be acquired, but only the image data from the active tracking camera may be used for positional tracking. The additional image data from the inactive cameras may be used for, in predetermined intervals, pose verification or for calibrating the method.

In a step, S4, the pose, estimated in step S3, may be assessed by calculating a reliability value of the pose of the unit. The reliability value is then compared to a predetermined threshold value. If the comparison between the reliability value and the threshold value returns that the reliability value is below the threshold value the assessment may determine that the positional tracking using the active camera is unreliable. If the reliability value is above the threshold value the positional tracking using the active camera is determined to be reliable. The step of assessment may also comprise calculating the difference between the reliability and the threshold value. The difference may thereafter be used as a measure of how reliable the positional tracking using the active camera is. Additionally the step of assessing a reliability of the estimated pose may be a determination of whether the estimated pose can be determined or not. Further, to assessing the pose of the unit using visual information, additional sensor data may be evaluated when assessing the pose. Such information may be inertial movement sensor data, preferably from an inertial movement unit, IMU. The information may contain the motion speed data of the unit and/or the accelerometer data of the unit. The information from the IMU may be used for activating or deactivating a camera when motion speed is determined to be too high resulting in too much motion blur in the acquired images. Hence, power may be saved by deactivating positional tracking when the acceleration or motion speed of the unit is high. i.e. above a threshold value.

The step S4 of assessing the reliability value of the unit and comparing it to a threshold value, may thus determine if tracking using the active camera is reliable or unreliable. The step of assessing the reliability value of the estimated pose may be a determination if the position or pose can be determined or not. Hence, the method may be used for evaluating and selecting an inactive camera as a tracking camera when tracking using the currently active tracking camera is not possible. The method may also be used for evaluating if one of the inactive cameras could provide more visual odometry information, and if switching to said inactive camera would result in better unit positional tracking.

The threshold value may be a number or a set of threshold values. If a set of threshold values is used, a first threshold value may be indicative of if tracking is possible, and a second threshold may be indicative that tracking is possible and of a certain quality level.

In a step S5, a candidate camera is selected based on the current orientation of the unit. Hence, based on the current knowledge of the orientation of the unit a candidate camera may be selected. The candidate camera may then be a camera having a field of view pointing in a direction having a high density of visual odometry information. The candidate camera may then have a high probability of providing image data from which a high reliability value may be calculated.

In a step, S6, and based on the step S5 of selecting a candidate camera based on the current orientation of the unit; the method steps of S1 to S5 are performed on the candidate camera to verify that an estimated pose has a reliability value above the threshold, and then selecting the candidate camera as an active tracking camera.

The step S4 of estimating a pose of the unit may be done using image data corresponding to a point in time when acquiring said image data. The estimating of the pose is thus based on present image data acquired from a camera. However, the estimated pose of method step S3 of estimating the pose of the unit may be a predicted pose, corresponding to a point in time after acquiring the image data. If the movement of the unit 1 is predicted, using for instance inertial movement sensor data, IMU data, or if the unit 1 movement is predicted based on an algorithm with having as calculation input the current movement speed and direction, the predicted position and pose of the unit and the active camera may be assessed. Hence, the method may be used for estimating and assessing the reliability of a future pose and based on the assessed pose initiate a camera switch to an inactive candidate camera.

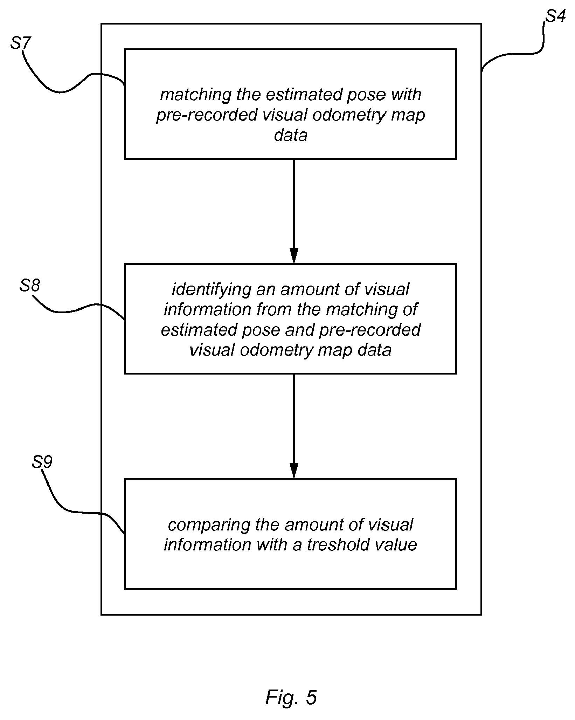

Fig. 5 shows a flow chart illustrating additional method steps to the step of assessing the reliability of a pose S4, when the estimated pose is a current pose, i.e. a pose corresponding to a point in time when the image data was acquired.

In a step S7, the current pose is matched with pre-recorded visual odometry map data. The step S7 of matching involves comparing the visual odometry data of the current pose of the unit to pre-recorded visual odomtetry map data of the environment around the unit and identifying visual odometry information present, and/or not being present, in both the current pose visual odometry data and the pre-recorded visual odometry map data.

In a step S8, an amount of current visual information from the step S7 of matching of current pose and pre-recorded visual odometry map data is identified. The identified amount of visual information may be a reliability value, or if the visual odometry information comprises a combination of types of visual odometry information the identified amount may be calculated as a weighted reliability value, weighing different types of visual odometry information, such as identified edges, corners, blobs or ridges.

In a step S9, the amount of current visual information, or the reliability value, is compared with a threshold value. If the comparison returns that the amount of current visual information, or the reliability, is above the threshold value the current pose may be regarded as a reliable current pose. If the current pose is considered reliable a switch may be initiated to switch active tracking camera to the camera with the current pose.

It is noted that an alternative assessment of the reliability of a current pose is a determination that no pose can be determined. In this case, the currently available image data does not provide sufficient mapping with the odometry map to enable determining the current pose. For a single camera system, this effectively means that visual tracking is lost. According to an embodiment of the present invention, this situation is treated as a finding of insufficient reliability (in other words, no estimated pose at all is considered as a (very) unreliable estimated pose). Step S6 will then result in a selection of a more appropriate camera.

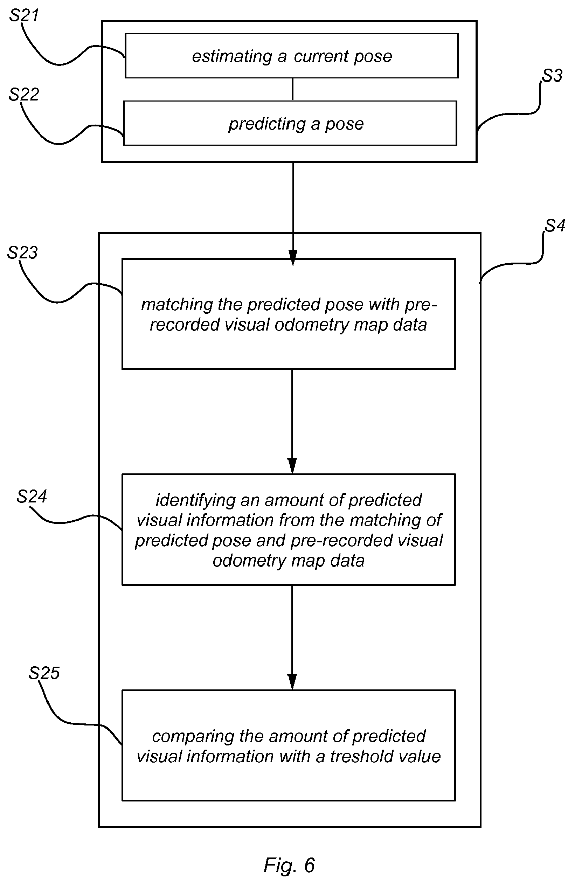

Fig. 6 shows a flow chart illustrating steps included in step S3 and S4, in the case where the estimated pose is a predicted pose, i.e. a pose corresponding to a point in time after the image data was acquired. First (step S21) a current pose is determined as above. Then, in step S22, a predicted pose is determined. The predicted pose may be based on extrapolating the current movement of the controller e.g. additional inertial movement sensor data from the IMU.

In the case of a predicted pose, the step S5 may include the following steps. In a step S23, the predicted pose is matched with pre-recorded visual odometry map data. The step S23 of matching involves comparing the visual odometry data of the predicted pose of the unit to pre-recorded visual odometry map data of the environment around the unit and identifying visual odometry information present, and/or not being present, in both the predicted pose visual odometry data and the pre-recorded visual odometry map data.

In a step S24, an amount of predicted visual information from the step S23 of matching of predicted pose and pre-recorded visual odometry map data is identified. The identified amount of visual information may be a reliability value, or if the visual odometry information comprises a combination of types of visual odometry information the identified amount may be calculated as a weighted reliability value, weighing different types of visual odometry information, such as identified edges, corners, blobs or ridges.

In a step S25, the amount of predicted visual information, or the reliability value, is compared with a threshold value. If the comparison returns that the amount of predicted visual information, or the reliability, is above the threshold value the predicted pose may be regarded as a reliable predicted pose. If the predicted pose is considered reliable a switch may be initiated to switch active tracking camera to the camera with the predicted pose. Predicting the pose may also be performed on an active tracking camera. In such a case: if the amount of predicted visual information, or the reliability, is below the threshold value, the method may initiate a camera switch to one of the inactive of the plurality of cameras.

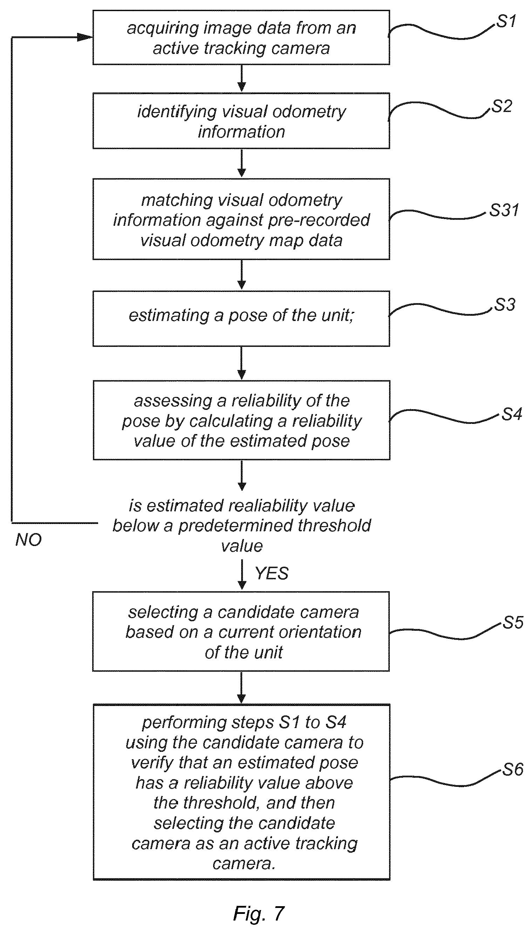

Fig. 7 shows the flow chart shown in Fig. 4 further comprising the method step of matching S31 visual odometry information against pre-recorded visual odometry map data. After method step S2 of identifying visual odometry information the, identified visual odometry map data is compared and matched to pre-recorded visual odometry map data. The visual odometry map data may be stored in a database on the unit or on an offsite server. Subsequent to step S31, and based on the matching of data, the pose of the unit is estimated in step S3, of estimating the pose of the unit.

Matching visual odometry data to pre-recorded visual odometry map data of an environment involves finding visual odometry information, or features, from the camera being present in the pre-recorded visual odometry map data. The step of matching may also involve determining non-matching visual odometry information present in the image data from the camera and not in the pre-recorded visual odometry map data. Hence the matching may look at differences or at similarities in the visual odometry information and in the visual odometry map data. As a non-limiting example the visual odometry map data may be pre-recorded SLAM map data recorded at an earlier date.

The person skilled in the art realizes that the present invention by no means is limited to the preferred embodiments described above. On the contrary, many modifications and variations are possible within the scope of the appended claims. For example, the geometrical design of the controller may of course be different, as may the number of cameras. The communication between controller and other parts of the system may be achieved in a number of different ways. Also, the system may include additional elements such as sensors, transponders, tactile feedback, holographic displays, etc.

## Claims

1. A method for positional tracking of a unit having a plurality of cameras, including a set of active cameras and a set of inactive cameras, said method comprising:
A) acquiring image data from at least one active tracking camera;
B) identifying visual odometry information from said image data;
C) estimating, based on said visual odometry information, a pose of the unit;
D) assessing a reliability of said pose by calculating a reliability value of said estimated pose; and
if said estimated reliability value is below a predetermined threshold value:
E) selecting a candidate camera based on a current orientation of the unit, and
performing the method steps of A to D using the candidate camera to verify that an estimated pose has a reliability value above the threshold, and then selecting said candidate camera as an active tracking camera.

2. The method according to claim 1, wherein the step of selecting a candidate camera includes detecting a direction of movement of the unit, and selecting a camera with a direction substantially parallel to said direction of movement.

3. The method according to claim 1 or 2, wherein the step of estimating a pose of the unit includes matching said visual odometry information against pre-recorded visual odometry map data.

4. The method according to claim 3, wherein the step of selecting a candidate camera includes selecting a camera with a field of view in a direction corresponding to a high visual information density portion of said visual odometry map.

5. The method according to any one of the preceding claims wherein said image data comprises a plurality of successive image frames.

6. The method for positional tracking according to any preceding claim, wherein said estimated pose corresponds to a point in time when acquiring said image data.

7. The method for positional tracking according to any one of the preceding claims, wherein said assessing a reliability of said estimated pose is a determination of whether said estimated pose can be determined or not.

8. The method for positional tracking according to any one of the preceding claims, wherein said estimated pose is a predicted pose, corresponding to a point in time after acquiring said image data.

9. The method for positional tracking according to any one of the preceding claims, wherein assessing a reliability of said predicted pose includes:
- matching the predicted pose with the pre-recorded visual odometry map data,
- identifying an amount of predicted visual information from said matching,
- comparing the amount of predicted visual information with a threshold value.

10. The method for positional tracking according to claim 11, wherein said predicted pose is based also on a prediction of a unit movement.

11. The method for positional tracking according to any one of claims 8-10, wherein said predicted pose is based also on movement data acquired from one or several motion sensors, wherein the motion sensors include at least one of: an inertial movement sensor, a magnetometer, a radar sensor, a lidar sensor, a laser sensor, a micro distance sensor, a beacon, an RFID sensor, a GPS sensor, or another positional tracking sensor.

12. A unit for positional tracking in an environment, said unit comprising:
- at least a first and a second camera adapted for acquiring image data comprising visual odometry information;
- a data processing device adapted for performing the method according to any one of the claim 1-10.

13. The unit according to claim 12, further comprising at least one motion sensor; wherein the motion sensors include at least one of: an inertial movement sensor, a magnetometer, a radar sensor, a lidar sensor, a laser sensor, a micro distance sensor, a beacon, an RFID sensor, a GPS sensor, or another positional tracking sensor., and wherein said unit is further configured for performing the method according to claim 11.

14. The unit according to any one of claims 12-13, further comprising a transceiver adapted for sending and receiving information from and to the unit.

15. The unit according to any one of claims 12-14, comprising a plurality of cameras, wherein each of said plurality of cameras has a non-overlapping camera frustum.
